# EUROPEAN PATENT SPECIFICATION

(11) **EP 4 197 968 B1**
(45) Date of publication and mention of the grant of the patent: **25.06.2025**
(21) Application number: 21869281.2
(22) Date of filing: 09.09.2021
(51) Int. Cl.: C01B 32/05, C01B 32/336, C01B 32/318, H01M 4/96, H01M 4/88, B01J 27/24, H01M 4/04, H01M 4/587, H01M 4/90

(54) **POROUS CARBON MATERIAL AND PRODUCTION METHOD THEREFOR**
PORÖSES KOHLENSTOFFMATERIAL UND HERSTELLUNGSVERFAHREN DAFÜR
MATÉRIAU CARBONÉ POREUX ET SON PROCÉDÉ DE PRODUCTION

(30) Priority: 17.09.2020 JP 2020156580
(43) Date of publication of application: 21.06.2023
(73) Proprietor: Denka Company Limited, Tokyo 103-8338 (JP)
(72) Inventor: OSUMI Shinichiro, Tokyo 103-8338 (JP); TAKEUCHI Yutaka, Tokyo 103-8338 (JP); TSUKAMOTO Ayumu, Tokyo 103-8338 (JP)
(74) Representative: Hoffmann Eitle
(86) International application number: PCT/JP2021/033175
(87) International publication number: WO 2022/059594

(56) References cited:
- WO-A1-2016/024525
- JP-A- 2014 034 475
- JP-A- 2016 032 802
- JP-A- 2016 056 053
- JP-A- 2017 193 474
- JP-A- 2019 119 632
- US-A1- 2017 365 851
- US-A1- 2017 365 851
- ZHIYONG WANG ET AL: "Silica-free syntheses of hierarchically ordered macroprous polymer and carbon monoliths with controllable mesoporosity", JOURNAL OF MATERIALS CHEMISTRY, ROYAL SOCIETY OF CHEMISTRY, GB, vol. 18, 17 March 2008 (2008-03-17), pages 2194 - 2200, XP002551123, ISSN: 0959-9428, [retrieved on 20080317], DOI: 10.1039/B719489G
- GUOHUA SUN ET AL: "Preparation of mesoporous carbon spheres with a bimodal pore size distribution and its application for electrochemical double layer capacitors based on ionic liquid as the electrolyte", MICROPOROUS AND MESOPOROUS MATERIALS, ELSEVIER, AMSTERDAM ,NL, vol. 151, 18 October 2011 (2011-10-18), pages 282 - 286, XP028344048, ISSN: 1387-1811, [retrieved on 20111025], DOI: 10.1016/J.MICROMESO.2011.10.023
- TKACHENKO VITALII ET AL: "Diblock Copolymer Core-Shell Nanoparticles as Template for Mesoporous Carbons: Independent Tuning of Pore Size and Pore Wall Thickness", LANGMUIR, vol. 35, no. 49, 13 November 2019 (2019-11-13), US, pages 16324 - 16334, XP093115291, ISSN: 0743-7463, DOI: 10.1021/acs.langmuir.9b02994

## Description

### Technical Field

The present invention relates to a production method for a porous carbon material.

### Background Art

Carbon materials, particularly, porous carbon materials having pores are useful in uses such as catalyst carriers and electrode materials, and studies are underway regarding a variety of production methods. For example, Patent Literature 1 discloses a method in which a mixture obtained by adding a solvent to a block copolymer having a hydrophilic block and a hydrophobic block, phenol and formaldehyde is heated to obtain porous carbon and the porous carbon is activated to obtain activated carbon. Patent Literature 2 relates to the preparation of a porous carbon structure comprising the steps of providing a template comprising voids, filling of at least part of the voids with a precursor for the formation of the porous carbon structure, carbonizing the precursor for the formation of the porous carbon structure and removing at least part of the template.
Wang et al. (J.Mater.Chem., 2008, 18, 2194-2200) relates to the silica-free syntheses of hierarchically ordered microporous polymer and carbon monoliths with controlled mesoporosity. Sun et al. (Microporous and Mesoporous Materials, 151, 2012, 282-286) relates to the preparation of mesoporous carbon spheres with a bimodal pore size distribution.

### Citation List

### Patent Literature

[Patent Literature 1] Japanese Unexamined Patent Publication No. 2014-034475
[Patent Literature 2] US Unexamined Patent Publication No. US 2017/036585 A1

### Summary of Invention

### Technical Problem

In uses where a reaction substrate reacts on an active metal (that is, on a reaction point) supported by a porous carbon material, there is a desire for the reaction substrate to easily arrive at near the reaction point in the porous carbon material. In addition, in uses where a porous carbon material is coated with a coating material, it is desired that the coating material and a reaction point be separated from each other to avoid the poisoning and burial of an active metal by the coating material.

An objective of the present invention is to provide a production method for a porous carbon material enabling a reaction substrate to easily arrive at a reaction point and enabling the reaction point to effectively function even when being coated with a coating material. In addition, the production method enables the above-described porous carbon material to be easily produced.

### Solution to Problem

The present disclosure relates to a production method for a porous carbon material having a first peak positioned in a pore diameter range of 4 nm or larger and 7 nm or smaller and a second peak positioned in a pore diameter range of 10 nm or larger and 1 µm or smaller in a pore size distribution measured by a mercury intrusion method.

Such a porous carbon material can be said to have a first pore group forming the first peak and a second pore group forming the second peak and can also be said to have a fine structure formed of the first pore group and a higher-order structure formed of the second pore group.

In the porous carbon material, a reaction substrate is capable of efficiently migrating through wide voids in the higher-order structure, and thus it is possible to efficiently transport the reaction substrate to a reaction point and to efficiently discharge a reaction product. In addition, the porous carbon material has the first pore group and is thus capable of realizing a high specific surface area and capable of efficiently supporting an active metal. Furthermore, the porous carbon material is coated with a coating material along the higher-order structure, which makes it possible to provide the coating material on the porous carbon material without poisoning and burying the active metal supported in the fine structure. As described above, the porous carbon material enables the reaction substrate to easily arrive at the reaction point and enables the reaction point to effectively function even when being coated with the coating material.

In the porous carbon material, a specific surface area may be 200 m²/g or larger and 1800 m²/g or smaller.

The first peak may be positioned in a pore diameter range of 4 nm or larger and 7 nm or smaller.

The second peak may be positioned in a pore diameter range of 20 nm or larger and 200 nm or smaller.

The present invention relates to a production method for a porous carbon material as described above according to claim 1, including a preparation step of preparing a resin compact containing a resin material that becomes a carbon source, a first template and a second template and a firing step of firing the resin compact to obtain the porous carbon material. In this production method, the first template contains an amphipathic molecule, and the second template contains polystyrene latex particles.

In such a production method, the first pore group is formed of a specific first template, and the second pore group is formed of a specific second template, and thus it is possible to easily form a porous carbon material having the above-described first peak and the above-described second peak.

In one aspect, the resin material may contain a polymer of phenol and formaldehyde.

The preparation step includes a resin material-forming step of forming a resin material that becomes a carbon source in a dispersion liquid containing a micelle formed of an amphipathic molecule, latex particles and an aqueous solvent to obtain a deposit containing the micelle, the latex particles and the resin material and a drying step of drying the deposit to obtain a resin compact containing the resin material, the amphipathic molecule and the latex particles.

In one aspect, the resin material-forming step may be a step of polymerizing phenol and formaldehyde in the dispersion liquid to obtain a deposit containing the micelle, the latex particles and a polymer of the phenol and the formaldehyde.

### Advantageous Effects of Invention

According to the present invention, a production method for a porous carbon material enabling a reaction substrate to easily arrive at a reaction point and enabling the reaction point to effectively function even when being coated with a coating material to be easily produced is provided is provided.

### Brief Description of Drawings

FIG. 1(a) is a cross-sectional view schematically showing one example of a resin compact, and FIG. 1(b) is a cross-sectional view schematically showing one example of a porous carbon material.
FIG. 2(a) is a view showing a SEM photograph of a porous carbon material obtained in Example 1, and FIG. 2(b) is a view showing a TEM photograph of the porous carbon material obtained in Example 1.
FIG. 3(a) is a view showing a SEM photograph of a porous carbon material obtained in Example 2, and FIG. 3(b) is a view showing a TEM photograph of the porous carbon material obtained in Example 2.
FIG. 4(a) is a view showing a SEM photograph of a porous carbon material obtained in Example 3, and FIG. 4(b) is a view showing a TEM photograph of the porous carbon material obtained in Example 3.
FIG. 5 is a view showing a pore distribution curve of the porous carbon material obtained in Example 1.

### Description of Embodiments

Hereinafter, a preferable embodiment of the present invention will be described in detail.

### (Porous Carbon Material)

A porous carbon material is a carbon material having a plurality of pores.

The porous carbon material has a first peak positioned in a pore diameter range of 4 nm or larger and 7 nm or smaller and a second peak positioned in a pore diameter range of 10 nm or larger and 1 µm or smaller in a pore size distribution measured by a mercury intrusion method. "Having a peak in a pore diameter range of A₁ to A₂ in the pore size distribution" means that a peak having a peak top in a pore diameter range of A₁ to A₂ is present in a pore size distribution curve.

The porous carbon material can also have a first pore group forming the first peak and a second pore group forming the second peak. In addition, the porous carbon material can also be said to have a fine structure formed of the first pore group and a higher-order structure formed of the second pore group.

In the porous carbon material, a reaction substrate is capable of efficiently migrating through wide voids in the higher-order structure, and thus it is possible to efficiently transport the reaction substrate to a reaction point and to efficiently discharge a reaction product. In addition, the porous carbon material has the first pore group and is thus capable of realizing a high specific surface area and capable of efficiently supporting an active metal. Furthermore, in the present embodiment, the porous carbon material is coated with a coating material along the higher-order structure, which makes it possible to provide the coating material on the porous carbon material without poisoning and burying the active metal supported in the fine structure. As described above, according to the porous carbon material, it is possible to make the reaction substrate easily arrive at the reaction point and make the reaction point effectively function even when the porous carbon material is coated with the coating material.

In the present specification, the pore size distribution of the porous carbon material is measured by a mercury intrusion method. In more detail, the pore size distribution is measured by the following method. In addition, the pore size distribution is shown by a pore size distribution curve in which pore diameters (pore diameters) (logarithmic scale) are indicated along the horizontal axis and log differential pore volumes (linear scale) are indicated along the vertical axis. First, 40 to 80 mg of the porous carbon material is collected in a 5 cc measuring cell. Next, the mercury pressure is raised from 1 psia to 60000 psia, and the amount of mercury having intruded is measured using an automatic mercury porosimeter (AUTOPORE V9620 manufactured by Shimadzu Corporation-Micromeritics Instrument Corporation). In addition, a pore distribution is obtained from the obtained pressure and amount intruded. The mercury contact angle is set to 130 degrees, and the mercury surface tension is set to 485 dynes/cm.

In the present embodiment, the first peak is preferably positioned in a pore diameter range of 4 nm or larger and 7 nm or smaller, and the second peak is preferably positioned in a pore diameter range of 20 nm or larger and 200 nm or smaller. In such a case, the above-described effects are more significantly exhibited.

The first peak and the second peak are preferably peaks having a peak value of 0.1 mL/g or more and more preferably peaks having a peak value of 0.5 mL/g or more. In addition, the peak values of the first peak and the second peak may be, for example, 4.0 mL/g or less or may be 2.0 mL/g or less. That is, the peak value of the first peak may be, for example, 0.1 to 4.0 mL/g, 0.1 to 2.0 mL/g, 0.5 to 4.0 mL/g or 0.5 to 2.0 mL/g. In addition, the peak value of the second peak may be, for example, 0.1 to 4.0 mL/g, 0.1 to 2.0 mL/g, 0.5 to 4.0 mL/g or 0.5 to 2.0 mL/g.

The first peak and the second peak are preferably a peak having a highest peak value (peak A) or a peak having a second highest peak value (peak B) among peaks positioned in a pore diameter range of 4 nm or larger and 1 µm or smaller. That is, when the first peak is the peak A, the second peak is preferably the peak B, and, when the first peak is the peak B, the second peak is preferably the peak A.

The specific surface area of the porous carbon material is preferably 200 m²/g or larger, more preferably 400 m²/g or larger and still more preferable 600 m²/g or larger. In such a case, when the porous carbon material supports an active metal, the dispersibility of the active metal on the porous carbon material improves, and there is a tendency that a reaction point is more efficiently formed. In addition, the specific surface area of the porous carbon material is preferably 1800 m²/g or smaller, more preferably 1600 m²/g or smaller and still more preferable 1400 m²/g or smaller. In such a case, the strength of the porous structure of the porous carbon material further improves, and there is a tendency that the porous structure becomes more stable. That is, the specific surface area of the porous carbon material may be, for example, 200 to 1800 m²/g, 200 to 1600 m²/g, 200 to 1400 m²/g, 400 to 1800 m²/g, 400 to 1600 m²/g, 400 to 1400 m²/g, 600 to 1800 m²/g, 600 to 1600 m²/g or 600 to 1400 m²/g.

In the present specification, as the specific surface area of the porous carbon material, values measured by a nitrogen adsorption method are shown. In more detail, the specific surface area is measured by the following method according to JIS Z 8830. First, the porous carbon material is dried at 305°C for two hours under nitrogen circulation. Next, the nitrogen adsorption isotherm is measured using an automatic specific surface area measuring instrument (BELSORP mini manufactured by MicrotracBEL Corp.). In addition, the specific surface area is calculated from the obtained nitrogen adsorption isotherm using a BET method.

The porous carbon material may contain, for example, a fired product of a resin material. The porous carbon material may be, for example, a fired product of a resin compact containing a resin material.

The resin material needs to be a material capable of forming amorphous carbon by being fired. Examples of the resin material include phenolic resins (novolac type phenolic resins and resol type phenolic resins), furan resins, epoxy resins, unsaturated polyester resins, ester resins, urea resins, melamine resins, alkyd resins, xylene resins, polyurethane resins, polyuric acid resins, acrylonitrile resins, polystyrene resins, bismaleimide/triazine resins, divinylbenzene resins, polyimide resins, diallyl phthalate resins, vinyl ester resins, and the like.

As the resin material, a polymer of phenol and formaldehyde can be preferably used.

The phenol is a compound having at least one hydroxy group bonding to an aromatic ring. Examples of the phenols include phenol, o-cresol, m-cresol, p-cresol, dihydroxybenzene (1,2-dihydroxybenzene (catechol), 1,3-dihydroxybenzene (resorcinol), 1,4-dihydroxybenzene (hydroquinone)), 5-methylresorcinol (orcinol), urushiol, pyrogallol, phloroglucinol, hydroxyhydroquinone, hydroxynaphthalene, hydroxyanthracene, hydroxypyridine, furfuryl alcohol, and the like. As the phenol, phenol, resorcinol, phloroglucinol, 1,5-dihydroxynaphthalene and furfuryl alcohol are preferable, and resorcinol is more preferable. One kind of phenol may be used singly or two or more kinds of phenols may be jointly used.

The polymer may be a polymer obtained by polymerizing phenol and formaldehyde or may be a polymer obtained by reacting phenol and a multimer of formaldehyde (for example, paraformaldehyde).

The polymer may be a polymer by an acid catalyst or may be a polymer by a base catalyst, but is preferably a polymer by an acid catalyst.

The fired product of the resin material needs to be a product obtained by firing the resin material under conditions where amorphous carbon is formed. Firing conditions may be changed as appropriate depending on the kind or the like of the resin material.

The porous carbon material can be produced by, for example, the following production method.

### (Production Method for Porous Carbon Material)

A production method for a porous carbon material of the present embodiment includes a preparation step of preparing a resin compact containing a resin material that becomes a carbon source, a first template and a second template and a firing step of firing the resin compact to obtain the porous carbon material. In the present embodiment, the first template contains an amphipathic molecule, and the second template contains latex particles.

According to the production method of the present embodiment, the first pore group is formed of the first template, and the second pore group is formed of the second template, and thus it is possible to easily produce the porous carbon material of the present embodiment.

Hereinafter, each step of the production method of the present embodiment will be described in detail with reference to drawings.

In the preparation step, a resin compact containing a resin material that becomes a carbon source, a first template and a second template is prepared.

The resin material only needs to be a material capable of forming amorphous carbon by being fired. As the resin material, the same as those described above can be exemplified.

The first template needs to be a template containing an amphipathic molecule and capable of forming the first pore group that forms the first peak.

The amphipathic molecule is preferably a molecule capable of forming a micelle in water. According to such an amphipathic molecule, a resin compact containing the first template can be easily obtained by dispersing the formed micelle in the resin material.

As the amphipathic molecule, a well-known molecule capable of forming a micelle in water can be used with no particular limitations. Examples of the amphipathic molecule include a diblock copolymer having a hydrophilic block-hydrophobic block structure, a triblock copolymer having a hydrophilic block-hydrophobic block-hydrophilic block structure, a triblock copolymer having a hydrophobic block-hydrophilic block-hydrophobic block structure and the like.

Examples of the hydrophilic block include a polyethylene oxide block, a polyvinylpyridine block, a polymethyl methacrylate block and the like. Among these, a polyethylene oxide block is preferable. The number of ethylene oxide units in the polyethylene oxide block is preferably 20 to 150 and more preferably 90 to 120. That is, the number of the ethylene oxide units in the polyethylene oxide block may be, for example, 20 to 150, 20 to 120, 90 to 150 or 90 to 120.

Examples of the hydrophobic block include a polypropylene oxide block, a hydrocarbon block, a polystyrene block and the like. Among these, a polypropylene oxide block is preferable. The number of propylene oxide units in the polypropylene oxide block is preferably 30 to 100 and more preferably 60 to 80. That is, the number of the propylene oxide units in the polypropylene oxide block may be, for example, 30 to 100, 30 to 80, 60 to 100 or 60 to 80.

As the amphipathic molecule, a polyethylene oxide-polypropylene oxide-polyethylene oxide triblock copolymer is preferable.

In the present embodiment, the pore diameters of the first pore group (that is, the adjustment of the peak position of the first peak) can be performed by adjusting the particle diameters of a micelle that is formed of the amphipathic molecule. In other words, the amphipathic molecule may be a molecule capable of forming a micelle as a template that forms a pore group (first pore group) forming a peak in a pore diameter range of 4 nm or larger and 7 nm or smaller (first peak) (first template).

The second template needs to be a template containing latex particles and capable of forming the second pore group that forms the second peak.

The average particle diameter of the latex particles is not particularly limited as long as the second pore group can be formed, and may be, for example, 50 nm or larger and is preferably 100 nm or larger. In addition, the average particle diameter of the latex particles may be, for example, 5 µm or smaller and is preferably 1 µm or smaller. In the present specification, as the average particle diameter of the latex particles, the values of median diameters measured by a laser diffraction/scattering method are shown. That is, the average particle diameter of the latex particles may be, for example, 50 nm to 5 µm, 50 nm to 1 µm, 100 nm to 5 µm or 100 nm to 1 µm.

In the present embodiment, the pore diameters of the second pore group (that is, the adjustment of the peak position of the second peak) can be performed by adjusting the particle diameters of the latex particles. In other words, the latex particles may be particles that function as a template that forms a pore group (second pore group) forming a peak in a pore diameter range of 10 nm or larger and 1 µm or smaller (second peak) (second template).

A resin that configures the latex particles is not particularly limited, but needs to be vanished in smoke during the firing of the resin compact. Examples of the resin that configures the latex particles include a polystyrene resin, a polymethyl methacrylate resin and the like.

In the preparation step, the amount of the first template blended may be, for example, 30 parts by mass or more and is preferably 40 parts by mass or more and more preferably 50 parts by mass or more with respect to 100 parts by mass of the resin material. In addition, in the preparation step, the amount of the first template blended may be, for example, 140 parts by mass or less and is preferably 120 parts by less or more and more preferably 100 parts by mass or less with respect to 100 parts by mass of the resin material. That is, the amount of the first template blended in the preparation step may be, for example, 30 to 140 parts by mass, 30 to 120 parts by mass, 30 to 100 parts by mass, 40 to 140 parts by mass, 40 to 120 parts by mass, 40 to 100 parts by mass, 50 to 140 parts by mass, 50 to 120 parts by mass or 50 to 100 parts by mass with respect to 100 parts by mass of the resin material.

The pore volume of pores having a pore diameter of 4 nm or larger and 7 nm or smaller can be adjusted by adjusting the amount of the first template blended. That is, in the present embodiment, the amount of the first template blended may be adjusted as appropriate so that the pore volume of the pores having a pore diameter of 4 nm or larger and 7 nm or smaller in the porous carbon material is in the above-described preferable range.

In the preparation step, the amount of the second template blended may be, for example, 50 parts by mass or more and is preferably 100 parts by mass or more with respect to 100 parts by mass of the resin material. In addition, in the preparation step, the amount of the second template blended may be, for example, 1500 parts by mass or less and is preferably 1000 parts by mass or less with respect to 100 parts by mass of the resin material. That is, the amount of the second template blended in the preparation step may be, for example, 50 to 1500 parts by mass, 50 to 1000 parts by mass, 100 to 1500 parts by mass or 100 to 1000 parts by mass with respect to 100 parts by mass of the resin material.

The pore volume of pores having a pore diameter of 10 nm or larger and 1 µm or smaller can be adjusted by adjusting the amount of the second template blended. That is, in the present embodiment, the amount of the second template blended may be adjusted as appropriate so that the pore volume of the pores having a pore diameter of 10 nm or larger and 1 µm or smaller in the porous carbon material is in the above-described preferable range.

The preparation step includes a resin material-forming step of forming a resin material in a dispersion liquid containing a micelle formed of an amphipathic molecule, latex particles and an aqueous solvent to obtain a deposit containing the micelle, the latex particles and the resin material and a drying step of drying the deposit to obtain a resin compact containing the resin material, the amphipathic molecule and the latex particles.

In the resin material-forming step, for example, the resin material may be formed from a precursor of the resin material in the dispersion liquid. Here, the precursor of the resin material may be, for example, a monomer that forms the resin material by polymerization, a monomer that forms the resin material by modification or the like.

The aqueous solvent is a solvent containing water and may further contain an organic solvent that is compatible with water. Examples of the organic solvent include alcohols such as methanol, ethanol, 1-propanol and 2-propanol and the like.

The resin material-forming step may be, for example, a step of polymerizing phenol and formaldehyde in the dispersion liquid to obtain a deposit containing a polymer of the phenol and the formaldehyde, the micelle and the latex particles.

The phenol and the formaldehyde may be polymerized in the presence of a polymerization catalyst. The polymerization catalyst may be an acid catalyst or a base catalyst and is preferably an acid catalyst. That is, the dispersion liquid may contain a polymerization catalyst (acid catalyst or base catalyst) and preferably contains an acid catalyst.

Examples of the acid catalyst include hydrochloric acid, acetic acid, oxalic acid, sulfonic acid and the like. Examples of the base catalyst include sodium hydroxide, ammonia, amines and the like.

The ratio C₁/C₂ of the amount C₁ (mol) of phenol to the amount C₂ (mol) of aldehyde that are provided to the dispersion liquid may be, for example, 0.1 or more and is preferably 0.3 or more. In addition, the ratio C₁/C₂ may be, for example, 1.0 or less and is 0.9 or less. That is, the ratio C₁/C₂ may be, for example, 0.1 to 1.0, 0.1 to 0.9, 0.3 to 1.0 or 0.3 to 0.9.

Reaction conditions for the polymerization of phenol and formaldehyde are not particularly limited, for example, the reaction temperature may be 20°C to 80°C, and the reaction time may be 10 minutes to 96 hours.

In the drying step, the deposit is collected and the aqueous solvent is removed, thereby obtaining a resin compact. In the drying step, drying conditions are not particularly limited, and, for example, the drying temperature may be 20°C to 80°C.

In another preferable aspect (second aspect), the preparation step may include an impregnation step of impregnating a mass of latex particles with a dispersion liquid containing a micelle formed of an amphipathic molecule, the resin material (or a precursor thereof) and an aqueous solvent and a drying step of removing the aqueous solvent.

The mass of latex particles may be a body in which latex particles randomly aggregate or a body in which latex particles are regularly arrayed. The mass of latex particles may be, for example, a colloidal crystal.

The impregnation step may be step of impregnating the mass of latex particles with a dispersion liquid containing a micelle, phenol, formaldehyde and an aqueous solvent.

The dispersion liquid may further contain a polymerization catalyst (acid catalyst or base catalyst) and preferably further contains an acid catalyst.

The ratio C₁/C₂ of the amount C₁ (mol) of phenol to the amount C₂ (mol) of aldehyde that are provided to the dispersion liquid may be the same as that in the first aspect.

In the second aspect, the drying step may be a step of removing the aqueous solvent or may be a step of forming a resin material from a precursor of the resin material and removing the aqueous solvent.

For example, the drying step may be a step of obtaining a resin compact containing a polymer of phenol and formaldehyde, the mass of latex particles and a micelle of an amphipathic molecule by the polymerization of the phenol and the formaldehyde and the removal of the aqueous solvent.

The firing step is a step of firing the resin compact to obtain a porous carbon material.

Firing conditions in the firing step are not particularly limited, but need to be conditions where the resin material in the resin compact is capable of forming amorphous carbon. For example, the firing temperature may be 400°C to 2400°C.

Firing in the firing step is preferably performed under an inert gas atmosphere (for example, under a nitrogen atmosphere or under an argon atmosphere).

The production method of the present embodiment may further have, after the firing step, an activation step of heating the porous carbon material under an air. Heating conditions in the activation step are not particularly limited, for example, the heating temperature may be 400°C to 800°C, and the heating time may be one minute to one hour. The activation step makes it possible to increase the specific surface area of the porous carbon material.

In the production method of the present embodiment, a block-like porous carbon material is obtained by the firing step. The production method of the present embodiment may further have, after the firing step, a pulverization step of pulverizing the porous carbon material to obtain a powder-like porous carbon material. The shape of the porous carbon material may be changed as appropriate depending on the use of the porous carbon material.

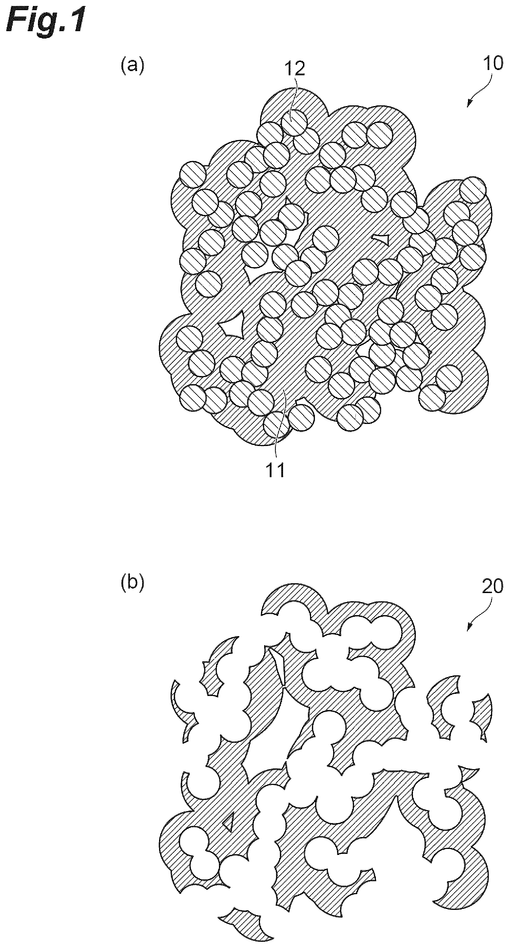

FIG. 1(a) is a cross-sectional view schematically showing one example of the resin compact, and FIG. 1(b) is a cross-sectional view schematically showing one example of the porous carbon material.

A resin compact 10 shown in FIG. 1(a) contains a resin material 11 and latex particles 12. In addition, a micelle (not shown) of an amphipathic molecule is contained in the resin material 11. When such a resin compact 10 is fired, the micelle in the resin material 11 is vanished in smoke, which forms fine pores corresponding to the first pore group, and the latex particles 12 are vanished in smoke, which generates voids and forms a branched higher-order structure.

A porous carbon material 20 shown in FIG. 1(b) forms a higher-order structure due to the latex particles 12 vanished in smoke, and, in the porous carbon material 20, fine pores are formed due to the micelle vanished in smoke. Such a porous carbon material 20 has a first peak attributed to the fine pores and a second peak attributed to the higher-order structure.

The use of the porous carbon material is not particularly limited, and the porous carbon material can be used in well-known uses of carbon materials with no particular limitations.

The porous carbon material enables a reaction point to effectively function even when being coated with a coating material and thus can be particularly preferably used in uses where the porous carbon material is coated with a coating material.

For example, the porous carbon material can be preferably used as a cathode catalyst carrier for polymer electrolyte fuel cells. A cathode catalyst contains an active metal (for example, platinum) supported by a porous carbon material and is used by being coated with an ionomer. According to the porous carbon material, the active metal supported in the first pore group is capable of sufficiently exhibiting the catalyst ability without being poisoned by the ionomer.

In addition, the porous carbon material can also be preferably used in uses such as an electrode material for capacitors, an electrode material for secondary batteries and a gas adsorption material.

Hitherto, the preferable embodiment of the present invention has been described, but the present invention is not limited to the above-described embodiment.

### [Examples]

Hereinafter, the present invention will be described in more detail with examples, but the present invention is not limited to these examples.

### (Example 1)

5.9 Parts by mass of resorcinol, 0.8 parts by mass of 5 mol/L hydrochloric acid, 9.3 parts by mass of a polyethylene oxide-polypropylene oxide-polyethylene oxide block copolymer (Pluronic F127 manufactured by Sigma-Aldrich), 44.1 parts by mass of a water dispersion of polystyrene latex particles (polystyrene particle diameter: 107 nm) and 29.7 parts by mass of ethanol were mixed and then added to 10.1 parts by mass of a formaldehyde liquid (formaldehyde content: 37 parts by mass), thereby preparing a dispersion liquid.

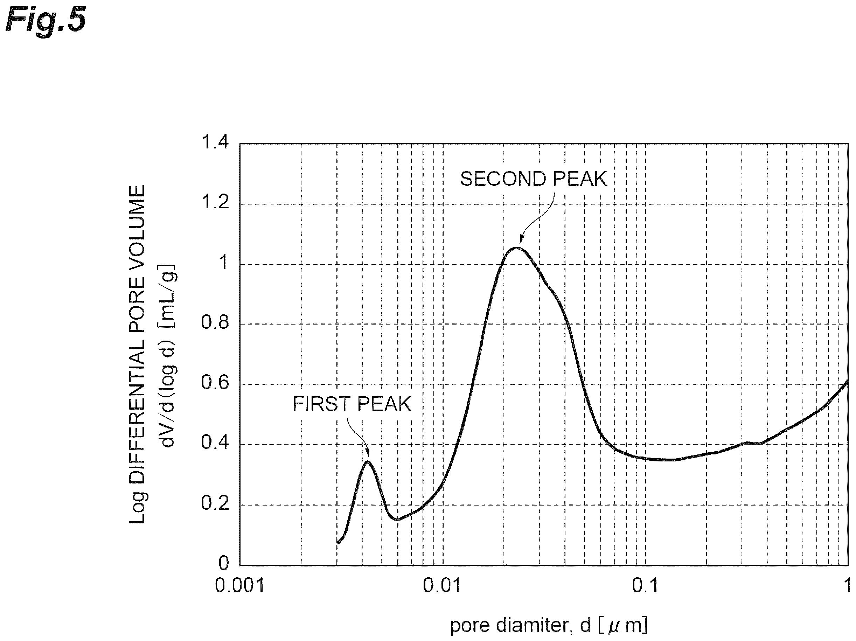

The obtained dispersion liquid was stirred at 25°C for 72 hours, and a deposit was obtained. This deposit was dried at 70°C for 24 hours, and a resin compact was obtained. This resin compact was heated up to 800°C at 1.5 °C/minute under a nitrogen atmosphere and then held at 800°C for three hours, and a block-like porous carbon material was obtained. The obtained porous carbon material was pulverized with a mortar to produce a powder-like porous carbon material. The first peak was 5 nm and the second peak was 23 nm in a pore distribution measured by a mercury intrusion method. The specific surface area was 612 m²/g. FIG. 5 is a view showing the pore distribution curve of the porous carbon material obtained in Example 1.

### (Example 2)

The porous carbon material obtained in Example 1 was heated at 520°C for 10 minutes under an air, thereby obtaining an activated porous carbon material. The first peak was 5 nm and the second peak was 20 nm in a pore distribution measured by the mercury intrusion method. The specific surface area was 1079 m²/g.

### (Example 3)

A water dispersion of polystyrene latex particles (polystyrene particle diameter: 463 nm) was centrifuged, and a deposit of the polystyrene latex particles was obtained. This deposit was dried at 60°C for 24 hours, and a mass of the polystyrene latex particles was obtained.

7.5 Parts by mass of resorcinol, 2.9 parts by mass of phloroglucinol, 0.5 parts by mass of 5 mol/L hydrochloric acid, 14.4 parts by mass of a polyethylene oxide-polypropylene oxide-polyethylene oxide block copolymer (Pluronic F127 manufactured by Sigma-Aldrich), 52.6 parts by mass of ethanol and 5.5 parts by mass of ultrapure water were mixed and then added to 16.7 parts by mass of a formaldehyde liquid (formaldehyde content: 37 parts by mass), thereby preparing a dispersion liquid. The mass of the polystyrene latex particles was impregnated with this dispersion liquid and dried at 25°C for 24 hours, and a resin compact was obtained. This resin compact was heated up to 800°C at 1.5 °C/minute under a nitrogen atmosphere and then held at 800°C for three hours, and a block-like porous carbon material was obtained. The obtained porous carbon material was pulverized with a mortar to produce a powder-like porous carbon material. The first peak was 5 nm and the second peak was 89 nm in a pore distribution measured by the mercury intrusion method. The specific surface area was 512 m²/g.

### (Comparative Example 1)

A water dispersion of polystyrene latex particles (polystyrene particle diameter: 463 nm) was centrifuged, and a deposit of the polystyrene latex particles was obtained. This deposit was dried at 60°C for 24 hours, and a mass of the polystyrene latex particles was obtained.

8.8 Parts by mass of resorcinol, 3.4 parts by mass of phloroglucinol, 0.6 parts by mass of 5 mol/L hydrochloric acid, 61.4 parts by mass of ethanol and 6.4 parts by mass of ultrapure water were mixed and then added to 19.5 parts by mass of a formaldehyde liquid (formaldehyde content: 37 parts by mass), thereby preparing a dispersion liquid. The mass of the polystyrene latex particles was impregnated with this dispersion liquid and dried at 25°C for 24 hours, and a resin compact was obtained. This resin compact was heated up to 800°C at 1.5 °C/minute under a nitrogen atmosphere and then held at 800°C for three hours, and a block-like porous carbon material was obtained. The obtained porous carbon material was pulverized with a mortar to produce a powder-like porous carbon material. The second peak was 92 nm in a pore distribution measured by the mercury intrusion method. In Comparative Example 1, no first peak was detected in the pore size distribution, and it was also not possible to confirm the formation of a fine structure even in a TEM image. The specific surface area was 494 m²/g.

### (Comparative Example 2)

10.8 Parts by mass of resorcinol, 5.3 parts by mass of 5 mol/L hydrochloric acid, 9.8 parts by mass of a polyethylene oxide-polypropylene oxide-polyethylene oxide block copolymer (Pluronic F127 manufactured by Sigma-Aldrich), 34.2 parts by mass of ethanol and 30.3 parts by mass of ultrapure water were mixed and then added to 9.7 parts by mass of a formaldehyde liquid (formaldehyde content: 37 parts by mass), thereby preparing a dispersion liquid. This dispersion liquid was dried at 25°C for 24 hours and then dried at 60°C for 24 hours, and a resin compact was obtained. This resin compact was heated up to 800°C at 1.5 °C/minute under a nitrogen atmosphere and held at 800°C for three hours, and a block-like porous carbon material was obtained. The obtained porous carbon material was pulverized with a mortar to produce a powder-like porous carbon material. The first peak was 6 nm in a pore distribution measured by the mercury intrusion method. In Comparative Example 2, no first peak was detected in the pore size distribution, and it was also not possible to confirm the formation of a fine structure even in a TEM image. The specific surface area was 755 m²/g.

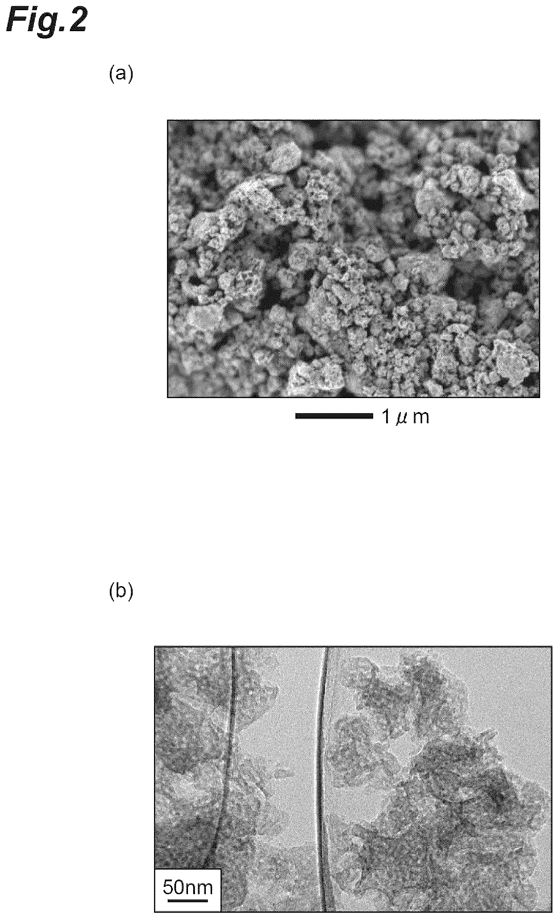

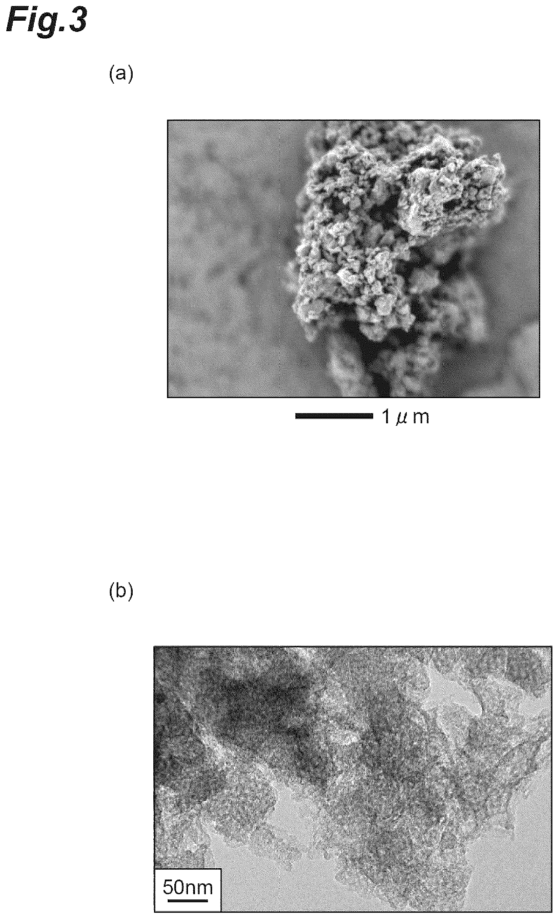

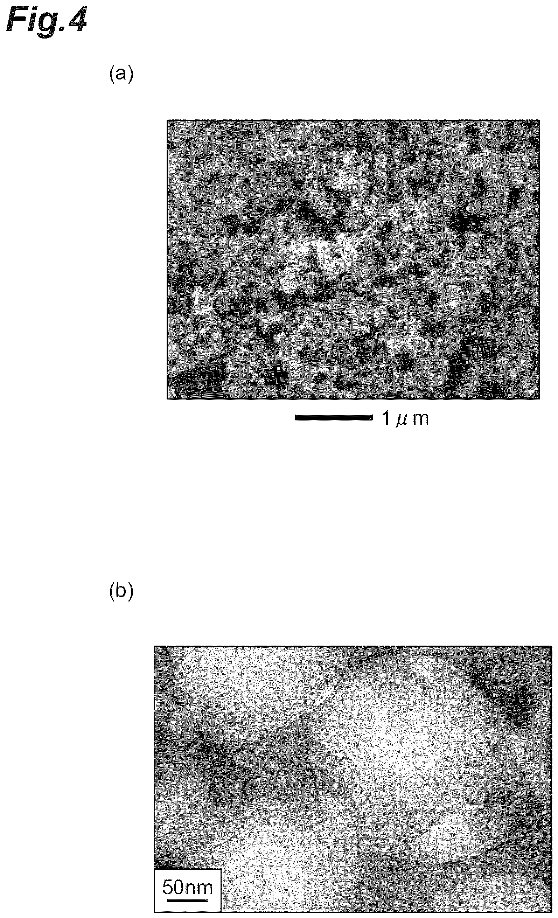

The structures of the porous carbon materials were observed from the SEM photographs and TEM photographs of the porous carbon materials obtained in Examples 1 to 3. The results are shown in FIG. 2 to FIG. 4. FIG. 2(a) is a view showing the SEM photograph of the porous carbon material obtained in Example 1, and FIG. 2(b) is a view showing the TEM photograph of the porous carbon material obtained in Example 1. FIG. 3(a) is a view showing the SEM photograph of the porous carbon material obtained in Example 2, and FIG. 3(b) is a view showing the TEM photograph of the porous carbon material obtained in Example 2. FIG. 4(a) is a view showing the SEM photograph of the porous carbon material obtained in Example 3, and FIG. 4(b) is a view showing the TEM photograph of the porous carbon material obtained in Example 3. From the results of the SEM photographs and the TEM photographs, it was confirmed that, in Examples 1 to 3, a fine structure formed of a first pore group and a higher-order structure formed of a second pore group were formed.

### Reference Signs List

10 resin compact, 11 resin material, 12 latex particle, 20 porous carbon material.

## Claims

1. A production method for a porous carbon material comprising:
a preparation step of preparing a resin compact containing a resin material that becomes a carbon source, a first template and a second template; and
a firing step of firing the resin compact to obtain the porous carbon material having a first peak positioned in a pore diameter range of 4 nm or larger and 7 nm or smaller and a second peak positioned in a pore diameter range of 10 nm or larger and 1 µm or smaller in a pore size distribution measured by a mercury intrusion method,
wherein the first template contains an amphipathic molecule,
the second template contains polystyrene latex particles, and
the preparation step comprises:
a resin material-forming step of forming a resin material that becomes a carbon source in a dispersion liquid containing a micelle formed of an amphipathic molecule, latex particles and an aqueous solvent to obtain a deposit containing the micelle, the latex particles and the resin material; and
a drying step of drying the deposit to obtain a resin compact containing the resin material, the amphipathic molecule and the latex particles.

2. The production method for a porous carbon material according to Claim 1,
wherein the resin material contains a polymer of phenol and formaldehyde.

3. The production method for a porous carbon material according to Claim 1,
wherein the resin material-forming step is a step of polymerizing phenol and formaldehyde in the dispersion liquid to obtain a deposit containing the micelle, the latex particles and a polymer of the phenol and the formaldehyde.

## Patentansprüche

1. Verfahren zur Herstellung eines porösen Kohlenstoffmaterials, umfassend:
einen Herstellungsschritt, bei dem ein Harzpressling hergestellt wird, der ein Harzmaterial, das eine Kohlenstoffquelle wird, ein erstes Templat und ein zweites Templat enthält; und
einen Brennschritt, bei dem der Harzpressling gebrannt wird, um das poröse Kohlenstoffmaterial zu erhalten, das einen ersten Peak, der in einem Porendurchmesserbereich von 4 nm oder größer und 7 nm oder kleiner liegt, und einen zweiten Peak, der in einem Porendurchmesserbereich von 10 nm oder größer und 1 µm oder kleiner liegt, aufweist, in einer durch ein Quecksilberintrusionsverfahren gemessenen Porengrößenverteilung,
wobei das erste Templat ein amphipathisches Molekül enthält,
das zweite Templat Polystyrol-Latexteilchen enthält, und der Herstellungsschritt umfasst:
einen Schritt zur Bildung eines Harzmaterials, bei dem ein Harzmaterial gebildet wird, das zu einer Kohlenstoffquelle in einer Dispersionsflüssigkeit wird, die eine aus einem amphipathischen Molekül gebildete Mizelle, Latexteilchen und ein wässriges Lösungsmittel enthält, um eine Ablagerung zu erhalten, die die Mizelle, die Latexteilchen und das Harzmaterial enthält; und
einen Trocknungsschritt, bei dem die Ablagerung getrocknet wird, um einen Harzpressling zu erhalten, der das Harzmaterial, das amphipathische Molekül und die Latexteilchen enthält.

2. Verfahren zur Herstellung eines porösen Kohlenstoffmaterials gemäß Anspruch 1,
wobei das Harzmaterial ein Polymer aus Phenol und Formaldehyd enthält.

3. Verfahren zur Herstellung eines porösen Kohlenstoffmaterials gemäß Anspruch 1,
wobei der Schritt zur Bildung eines Harzmaterials ein Schritt ist, bei dem Phenol und Formaldehyd in der Dispersionsflüssigkeit polymerisiert werden, um eine Ablagerung zu erhalten, die die Mizelle, die Latexteilchen und ein Polymer aus Phenol und Formaldehyd enthält.

## Revendications

1. Procédé de production d'un matériau carboné poreux, comprenant :
une étape de préparation consistant à préparer un compact de résine contenant un matériau de résine qui devient une source de carbone, un premier modèle et un second modèle ; et
une étape de cuisson consistant à cuire le compact de résine pour obtenir le matériau carboné poreux présentant un premier pic positionné dans une plage de diamètre de pore de 4 nm de large ou plus et 7 nm de large ou moins et un second pic positionné dans une plage de diamètre de pore de 10 nm ou plus et 1 µm ou moins dans une distribution de taille de pore mesurée par un procédé d'intrusion au mercure,
dans lequel le premier modèle contient une molécule amphipathique,
le second modèle contient des particules de latex polystyrène, et
l'étape de préparation comprend :
une étape de formation de matériau de résine consistant à former un matériau de résine qui devient une source de carbone dans un liquide de dispersion contenant une micelle formée d'une molécule amphipatique, de particules de latex et d'un solvant aqueux pour obtenir un dépôt contenant la micelle, les particules de latex et le matériau de résine ; et
une étape de séchage consistant à sécher le dépôt pour obtenir un compact de résine contenant le matériau de résine, la molécule amphipatique et les particules de latex.

2. Procédé de production d'un matériau carboné poreux selon la revendication 1,
dans lequel le matériau de résine contient un polymère de phénol et de formaldéhyde.

3. Procédé de production d'un matériau carboné poreux selon la revendication 1,
dans lequel l'étape de formation du matériau est une étape de polymérisation du phénol et du formaldéhyde dans le liquide de dispersion pour obtenir un dépôt contenant la micelle, les particules de latex et un polymère du phénol et du formaldéhyde.
